# EUROPÄISCHE PATENTSCHRIFT

(11) **EP 1 876 010 B1**
(45) Veröffentlichungstag und Bekanntmachung des Hinweises auf die Patenterteilung: **18.03.2009**
(21) Anmeldenummer: 06405288.9
(22) Anmeldetag: 06.07.2006
(51) Int. Cl.: B29C 51/04, B29C 55/16, B29C 55/12, B29C 55/02, B29C 51/14, B29C 47/06

(54) **Verfahren zum Thermoformen einer biaxialgereckten Kunststofffolie**
Process for thermoforming a biaxial stretched plastic film
Procédé pour thermoformage d'un film de matière plastique étirer biaxialement

(43) Veröffentlichungstag der Anmeldung: 09.01.2008
(73) Patentinhaber: Alcan Technology & Management Ltd., 8212 Neuhausen am Rheinfall (CH)
(72) Erfinder: Jammet, Jean-Claude, 8212 Neuhausen (CH); Muggli, Olivier, 8620 Wetzikon (CH); Matsuo, Keizo, 8049 Zürich (CH)

(56) Entgegenhaltungen:
- WO-A-00/37253
- DE-A1- 19 840 991
- DE-B- 1 164 645
- DE-C1- 19 622 082
- GB-A- 992 897

## Beschreibung

Die Erfindung betrifft ein Verfahren nach dem Oberbegriff des Anspruchs 1.

Das Thermoformen von Kunststofffolien zur Bildung von aus der Folienebene heraus geformten Behältern oder Näpfen ist ein bekanntes Verfahren zur Herstellung von Verpackungsteilen wie z.B. Bodenteilen von Blisterpackungen. Die als Vormaterial eingesetzten Kunststofffolien oder -filme werden üblicherweise kontinuierlich als Flachmaterial in Form von Folienbänder oder Platten in bekannte Weise durch Extrusion bzw. Coextrusion hergestellt. Bei der Herstellung von Flachmaterial einer Dicke von mehr als 400 µm wird der extrudierte Kunststoff als Band auf einer sogenannten Roll-Stack-Anlage gekühlt. Das zu einzelnen Blättern oder Platten geschnittene Material wird anschliessend in einer Thermoformmaschine auf die erforderliche Umformtemperatur erwärmt und in Kontakt mit einer Form geformt und abgekühlt.

Die mechanischen Eigenschaften und die Barrierewirkung der Folienbänder ist stark abhängig von den eingesetzten Kunststoffrohmaterialien, den gegebenenfalls zugesetzten Additiven, der Mono- oder Mehrschichtstruktur und den Verfahrensbedingungen. Damit das Material durch Thermoformen leicht umgeformt werden kann, muss die Qualität des verwendeten Flachmaterials optimiert werden. Insbesondere ist darauf zu achten, dass das zum Thermoformen vorgesehene Ausgangsmaterial ein möglichst anisotropes Verhalten und eine geringe Schrumpfneigung zeigt.

Die Bedingungen zum Thermoformen wie z.B. die Temperatur sind vom jeweils verwendeten Kunststoff abhängig. Beispielsweise beträgt die Thermoformtemperatur für Polypropylen (PP) etwa 150 °C. Eine gute Ausformung des Kunststoffs in den Formen kann beispielsweise durch Tiefziehen mittels Vakuum und/oder mittels Druckluftumformung erreicht werden. Zum Formen von tiefen Näpfen kann auch ein Stempel eingesetzt werden. Während des Verformens wird das Kunststoffmaterial gestreckt. Das Verhältnis zwischen der Enddicke nach dem Thermoformen und der Ausgangsdicke des eingesetzten Flachmaterials liegt im allgemeinen zwischen etwa 0,1 und 0,7.

Die Eigenschaften des thermogeformten Endprodukts sind in hohem Mass von den ursprünglichen Eigenschaften des Flachmaterials abhängig.

Einige Kunststoffe können zur Erhöhung ihrer mechanischen Eigenschaften und ihrer Barrierewirkung biaxial gestreckt werden. So ist es beispielsweise möglich, Polypropylen in jeder Achsenrichtung 8-fach zu strecken. Das biaxiale Strecken erfolgt bei einer Temperatur nahe dem Schmelzpunkt der semi-kristallinen Polymeren. Die durch Aufbau einer mechanischen Spannung in das Material eingebrachte Dehnung verbessert den E-Modul und vermindert die Permeabilität von Gasen, führt aber andererseits auch zu einer starken Abnahme der Bruchdehnung. Ebenso werden innere Restspannungen im Folienmaterial erzeugt. Wegen diesen beiden letztgenannten negativen Effekten wurden biaxial gestreckten Flachmaterialien zum Thermoformen von Behältern bis heute nicht eingesetzt.

Bekannt ist das biaxiale Strecken für die Herstellung von Kunststofffilmen einer Dicke von 5 bis etwa 100 µm. Derartige dünne Filme mit erhöhter Barrierewirkung und grösserem E-Modul werden z.B. als Verpackungsmaterial zur Verpackung von elektronischen Bauteilen eingesetzt.

Biaxiales Strecken kann grundsätzlich auf zwei Arten erzeugt werden, nämlich durch ein Zweischrittverfahren mit nacheinander durchgeführtem Strecken in den beiden Achsenrichtungen längs und quer zur Maschinenrichtung, oder durch simultanes biaxiales Strecken in Längs- und Querrichtung. Monoaxiales Recken führt zu einer hohen Anisotropie und einer nur geringfügigen Verbesserung der mechanischen Eigenschaften und der Barrierewirkung, so dass diese Technologie eine untergeordnete Rolle spielt.

Simultanes biaxiales Strecken ergibt sich beispielsweise bei Filmen. die über eine Blasfolienextrusion hergestellt werden, jedoch sind die Materialdicken, die mit diesen Verfahren erzeugt werden können, sehr beschränkt und erreichen nicht die zum Thermoformen von Behältern erforderlichen Dicken.

Das heute am weitesten verbreitete Verfahren zur Herstellung biaxial gestreckter Folien ist die Extrusion bzw. Coextrusion eines Flachmaterials mit nachfolgendem biaxialen Strecken in zwei Schritten, üblicherweise zuerst in der Längs- und anschliessend in der Querrichtung.

GB-A- 992 897 offenbart Ethylen-Copolymer Schrumpffolien durch Extrusion eines Films, ionisierendes Bestrahlen des extrudierten Films, mono- oder biaxiales Strecken des Films bei einer Temperatur zwischen 85° und 200°C mit anschliessendern Abkühlen auf eine Temperatur von weniger als 70°C unter Beibehaltung der Streckspannung.

DE-B-11 64 645 befasst sich mit dem Schrumpfvermögen von Kunststofffolien. Eine stranggepresste Rohfolie aus Polyethylen wird nach dem Abkühlen gestreckt und anschliessend einer vernetzenden Behandlung durch Elektronenbestrahlung unterworfen. Die so behandelte Folie wird nochmals aus einem warmen Bad heraus biaxial gestreckt und vor dem Nachlassen der Streckspannung gekühlt,

DE-C-196 22 082 betrifft eine füllstoff und pigmenthaltige, bedruckbare Polymerfolle als synthetisches Papier. Eine extrudierte Primärfolie wird nacheinander oder simultan in Längsrichtung und Querrichtung biaxial gestreckt. Die Dicke der Primärfolie liegt zwischen 2,0 und 6,0 mm und kann direkt durch Verstrecken auf die Dicke eines synthetischen Papiers von 60 bis 150 µm verarbeitet werden.

Aus der EP-B-1 274 576 ist eine thermoformbare, coextrudierte und biaxial gestreckte Mehrschicht-Polyesterfolie bekannt. Als maximale Dicke ist 500 µm erwähnt, die in den Beispielen angegebene Gesamtdicke der Polyesterfolie beträgt jedoch lediglich 12 µm.

Der Erfindung liegt die Aufgabe zugrunde, ein Verfahren der eingangs genannten Art anzugeben, das die Herstellung von thermogeformten Kunststofffolien einer Dicke von mindestens 0,110 mm mit durch Thermoformen aus der Folienebene heraus geformten Bodenteilen von Blisterpackungen, ermöglicht, deren mechanische Eigenschaften und Barrierewirkungen im Vergleich zu thermogeformten Folien nach dem Stand der Technik besser sind.

Zur erfindungsgemässen Lösung der Aufgabe führt ein Verfahren mit den Merkmalen des Anspruchs 1.

Vorteilhafte Weiterbildungen der Erfindung sind Gegenstand der abhängigen Ansprüche.

Die verbesserten mechanischen Eigenschaften und Barrierewirkung des Flachmaterials ermöglichen auch die Verbesserung der entsprechenden Eigenschaften am Endprodukt. Die hauptsächlichen Eigenschaften, die durch das biaxiale Strecken verbessert werden können, sind:
- Barriere gegen Sauerstoffdurchtritt
- Barriere gegen den Durchtritt von Wasserdampf und Gasen wie Aromastoffen
- Verbesserung des E-Moduls
- Verbesserung der Folientransparenz

Das Flachmaterial wird bevorzugt durch Extrusion oder Coextrusion hergestellt. Die einzelnen Schichten einer Mehrschichtstruktur können aber auch über Klebstoffschichten miteinander verklebt werden. Des Weiteren kann das Flachmaterial weitere Schichten umfassen, wie z.B. eine Metallisierung, aus dem Vakuum abgeschiedene Materialien wie z.B. SiOₓ oder Lacke.

Zweckmässigerweise ist das Streckverhältnis beim biaxialen Strecken in Längs- und Querrichtung gleich.

Bevorzugt wird das biaxiale Strecken in Längs- und Querrichtung simultan durchgeführt. Dieses Verfahren ermöglich ein biaxiales Strecken von Filmen aus z.B. EVOH oder PLA, die sich kein zweites Mal strecken lassen, d.h. mit dem herkömmlichen Zweischrittverfahren kein biaxiales Strecken ermöglichen.

Das Streckverhältnis in Längs- und Querrichtung beträgt bevorzugt 2:1 bis 8:1, insbesondere 2:1 bis 6:1. Das biaxiale Streckverhältnis muss auf den nachfolgenden Thermoformprozess optimiert werden, damit die am Endprodukt gewünschten mechanischen Eigenschaften und die Barrierewirkung erreicht werden.

Das minimale Streckverhältnis ergibt sich aus den Spezifikationen der eingesetzten Werkstoffe, aus der zu erzielenden Barrierewirkung und den gewünschten mechanischen Eigenschaften des Endproduktes sowie aus der Fähigkeit der Werkstoffe bzw. der platten- oder bandförmigen Flachmaterialien, gestreckt und zu einem Band oder eine Folie mit einer homogenen Dicke verarbeitet zu werden. Das minimale biaxiale Streckverhältnis wird bevorzugt, weil es ermöglicht, die Band- oder Foliendicke sowie die damit verbundenen Probleme hinsichtlich Flexibilität, Aufheizen und Abkühlen zu vermindern. Das minimale biaxiale Streckverhältnis wird durch die Anwendung optimierter Bedingungen wie Temperatur und Geschwindigkeit beim biaxialen Strecken erreicht. Ebenso wichtig ist auch das Anpassen der Rohmaterialien bezüglich des Molekulargewichts, der Zusammensetzung sowie der Geschwindigkeit und des Grades der Kristallisation.

Die Kunststofffolie ist bevorzugt eine Monofolie aus Polypropylen (PP) oder eine Mehrschichtfolie mit wenigstens einer Schicht aus Polypropylen ist.

Eine besonders bevorzugte Kunststofffolie ist eine Mehrschichtfolie mit dem Aufbau PP / Haftschicht / EVOH oder PP / Haftschicht / EVOH / Haftschicht / PP ist. Die Haftschicht ist beispielsweise ein mit Maleinsäureanhydrid gepfropftes Polypropylen (MAH-PP). Die Schicht aus EVOH kann auch durch Polyamid ersetzt werden, d.h. die Kunststofffolie ist eine Mehrschichtfolie mit dem Aufbau PP / Haftschicht / Polyamid (PA) oder PP / Haftschicht / PA / Haftschicht / PP.

Die Mono- oder Mehrschichtstruktur kann zur Gewichtsreduktion ein geschäumtes Polymer enthalten. Geschäumte Polymerschichten können direkt bei der Extrusion erhalten werden, z. B. durch Verwendung schaumbildender Zusätze, die zu einer Gasbildung führen, mit einer Nachbehandlung durch Wärme oder elektromagnetische Felder. Zum Schäumen einen sich eine Vielzahl von Kunststoffen, so u. a. PS, PC, PE und PP.

Zur Verbesserung der Eigenschaften des Bandes oder der Folie kann die Kunststofffolie vor oder nach dem biaxialen Strecken mit weiteren Werkstoffen mittels unterschiedlicher Technologien verbunden werden, z.B. durch Laminieren mit anderen Mono- oder Mehrschichtfilmen, durch Extrusions- oder Coextrusionsbeschichten oder durch Beschichten mit Lösemittel enthaltenden oder lösemittelfreien Lacken.

Das Anwendungsgebiet des erfindungsgemässen Verfahrens wird in der Herstellung von Bodenteilen von Blisterverpackungen für pharmazeutische und medizinaltechnische Produkte gesehen.

Die Erfindung wird nachfolgend anhand von Ausführungsbeispielen näher erläutert.

### Beispiele

Als Kunststoffmaterial zur Herstellung von Flachmaterial diente ein Homopolypropylen von Basell: Moplen HP 522J., mit einer Schmelzfliessrate von 3,0g/10 min (230°C / 2,16 kg) ISO 1133.

Auf einer Cast-Film-Maschine wurde aus dem Homopolypropylen Flachmaterial einer Dicke von 300 µm als nicht gestrecktes Referenzmaterial und einer Dicke von 2,2 mm zur Bereitstellung von gestrecktem Material hergestellt.

Das Strecken des Flachmaterials erfolgte simultan biaxial in Längs- und Querrichtung auf einer Bi-Streckanlage im Labormassstab. Es wurde Probenmaterial mit zwei unterschiedlichen Streckungen hergestellt:
Material A: Streckverhältnis in Längs- und Querrichtung 4:1 (4x4) Dicke 135 µm
Material B: Streckverhältnis in Längs- und Querrichtung 6:1 (6x6) Dicke 65 µm

Anschliessend wurden aus den Folien auf einer Pilotanlage Blisterbodenteile mit 10 zylindrischen Näpfen mit einem Durchmesser von 12 mm und einer Tiefe von 7 mm für pharmazeutische Anwendungen hergestellt. Die Thermoformtemperatur wurden zwischen 145 und 160 °C variiert. Die Formungszeit lag zwischen 1 und 3 s. Der angewandte Unter- bzw. Überdruck lag zwischen 0 und 2 bar. Die besten Thermoformbedingungen lagen bei einer Temperatur von 155 °C, einer Vakuumzeit von 2,5 s einer Überdruckzeit von 2 Sekunden.

Mit den verschiedenen Materialien wurden mit einem E-Modul Messgerät Zwick Z010 der E- Modul und die Bruchdehnung in Längsrichtung (MD) und in Querrichtung (TD) bestimmt. Die Bestimmung der Permeabilität für Wasserdampf erfolgte nach ASTM F 1249-90.

Die Versuchsergebnisse sind in den Tabellen 1 bis 3 zusammengestellt.

**Tabelle 1**

| **Nr.** | **Material** | **Dicke (µm)** | **Zustand** | **Biaxiales Streckverhältnis** |
|---|---|---|---|---|
| 1 | Homopolypropylen | 300 | cast Film | 0 |
| 2 | Homopolypropylen | 300 | cast Film | 0 |
| 3 | Homopolypropylen | 135 | biaxial gestreckt | 4X4 |
| 4 | Homopolypropylen | 135 | biaxial gestreckt | 4X4 |
| 5 | Homopolypropylen | 65 | biaxial gestreckt | 6X6 |
| 6 | Homopolypropylen | 65 | biaxial gestreckt | 6X6 |
| 11 | PVC | 250 | cast Film | 0 |

**Tabelle 2**

| **Nr.** | **Dicke [µm]** | **E-Modul (MD) [N/mm²]** | **E-Modul (TD) [N/mm²]** | **E-Modul (MD) Zunahme [%]** | **Bruchdehnung (MD) [%]** | **Bruchdehnung (TD) [%]** |
|---|---|---|---|---|---|---|
| 1 | 140 | 493 | 503 | | 970 | 873 |
| 2 | 182 | 519 | 519 | | 790 | 880 |
| 3 | 120 | 2350 | 2570 | 352 | 155 | 174 |
| 4 | | | | | | |
| 5 | 65 | 2720 | 2770 | 423 | 112 | 105 |
| 6 | | | | | | |
| 11 | | 3000 | 3000 | | | |

**Tabelle 3**

| **Nr.** | **Dicke [µm]** | **Permeabilität Wasserdampf [g/m².d.b]** | **Permeabilität Wasserdampf** (*) **[g/m².d.b]** | **Dickenverteilung nach Thermoformen** | |
|---|---|---|---|---|---|
| | | | | **Bodenrand [%]** | **Bodenmitte [%]** |
| 1 | 140 | 1.83 | 1.02 | | |
| 2 | 182 | 1.56 | 1.14 | 12 | 22 |
| 3 | 142 | 1 | 0.57 | | |
| 4 | 133 | 1.06 | 0.56 | 26 | 33 |
| 5 | 68 | 2.21 | 0.60 | | |
| 6 | 68 | 2.16 | 0.59 | 20 | 30 |
| 11 | | | | 20 | 34 |

| | | | | | |
|---|---|---|---|---|---|
| (*) bezogen auf eine Dicke von 250 µm | | | | | |

Die Ergebnisse zeigen, dass Polypropylen simultan biaxial bei tiefem Streckverhältnis gestreckt werden kann, wobei sich der E-Modul und die Barrierewirkung gegen Wasserdampf drastisch erhöhen. Die Dickenverteilung am thermogeformten Napf ist beim biaxial gereckten Material besser als beim ungereckten Referenzmaterial und ist vergleichbar mit PVC- oder PVDC-Material.

## Patentansprüche

1. Verfahren zur Herstellung, von Bodenteilen von Blisterverpackungen für pharmazeutische und medizinaltechnische Produkte aus einer ein- oder mehrschichtigen Kunststofffolie einer Dicke von mindestens 0,110 mm mit durch Thermoformen aus der Follenebene heraus geformten Behältern,
**dadurch gekennzeichnet, dass**
ein dem Aufbau der Kunststofffolie entsprechendes platten- oder bandförmiges Flachmaterial einer Dicke von mindestens 0,4 mm vor dem Thermoformen durch biaxiales Strecken In Längs- und Querrichtung auf die Dicke der Kunststofffolie abgedünnt wird und nachfolgend die Bodenteile durch Thermoformen der Kunststofffolie gebildet werden.

2. Verfahren nach Anspruch 1, **dadurch gekennzeichnet, dass** das Flachmaterial durch Extrusion oder Coextrusion hergestellt wird.

3. Verfahren nach Anspruch 1 oder 2, **dadurch gekennzeichnet, dass** das Streckverhältnis In Längs- und Querrichtung gleich ist.

4. Verfahren nach einem der Ansprüche 1 bis 3, **dadurch gekennzeichnet, dass** das Strecken in Längs- und Querrichtung simultan durchgeführt wird.

5. Verfahren nach einem der Ansprüche 1 bis 4, **dadurch gekennzeichnet, dass** das Streckverhältnis in Längs- und Querrichtung 2:1 bis 8:1, vorzugsweise 2:1 bis 6:1 beträgt.

6. Verfahren nach einem der Ansprüche 1 bis 5, **dadurch gekennzeichnet, dass** die Kunststofffolie eine Monofolie aus Polypropylen (PP) oder eine Mehrschichtfolie mit wenigstens einer Schicht aus Polypropylen ist.

7. Verfahren nach einem der Ansprüche 1 bis 5, **dadurch gekennzeichnet, dass** die Kunststofffolie eine Mehrschlchtfolie mit dem Aufbau PP / Haftschicht / EVOH oder PP / Haftschicht / EVOH / Haftschicht / PP ist.

8. Verfahren nach einem der Ansprüche 1 bis 5, **dadurch gekennzeichnet, dass** die Kunststofffolie eine Mehrschlchtfolie mit dem Aufbau PP / Haftschicht / Polyamid (PA) oder PP / Haftschicht / PA / Haftschicht / PP ist.

9. Verfahren nach einem der Ansprüche 1 bis 5, **dadurch gekennzeichnet, dass** die Kunststofffolie eine Mono- oder Mehrschichtfolie mit wenigstens einer geschäumten Schicht, insbesondere eine 3-Schichtstruktur mit dem Aufbau PP / PP geschäumt / PP oder PE / PE geschäumt / PE, ist.

## Claims

1. Method for producing base parts of blister packs for pharmaceutical and medicinal products from a single-layer or multilayer plastic film of thickness of at least 0.110 mm with containers moulded out of the film plane by thermoforming, **characterised in that** a sheet-or tape-like flat material corresponding to the structure of the plastic film of thickness of at least 0.4 mm is thinned down prior to thermoforming by biaxial stretching in the longitudinal and transverse direction to the thickness of the plastic film and subsequently the base parts are formed by thermoforming the plastic film.

2. Method according to claim 1, **characterised in that** the flat material is produced by extrusion or coextrusion.

3. Method according to claim 1 or 2, **characterised in that** the stretching ratio is the same in the longitudinal and transverse direction.

4. Method according to any of claims 1 to 3, **characterised in that** stretching is carried out simultaneously in the longitudinal and transverse direction.

5. Method according to any of claims 1 to 4, **characterised in that** the stretching ratio in the longitudinal and transverse direction amounts to 2:1 to 8:1, preferably 2:1 to 6:1.

6. Method according to any of claims 1 to 5, **characterised in that** the plastic film is a monofilm composed of polypropylene (PP) or a multilayer film containing at least one layer of polypropylene.

7. Method according to any of claims 1 to 5, **characterised in that** the plastic film is a multilayer film having the structure PP / adhesive layer / EVOH or PP / adhesive layer /EVOH / adhesive layer / PP.

8. Method according to any of claims 1 to 5, **characterised in that** the plastic film is a multilayer film having the structure PP / adhesive layer / polyamide (PA) or PP / adhesive layer / PP / adhesive layer / PP.

9. Method according to any of claims 1 to 5, **characterised in that** the plastic film is a monofilm or multilayer film having at least one foamed layer, in particular a 3-layer structure having the structure PP / foamed PP / PP or PE / foamed PE / PE.

## Revendications

1. Procédé de fabrication de pièces de fond d'emballage du type blister pour des produits pharmaceutiques et des produits du domaine médicinal, à partir d'une feuille de matière plastique d'une épaisseur d'au moins 0,110 mm à une ou plusieurs couches, présentant des récipients formés hors du plan de la feuille par thermoformage,
**caractérisé en ce qu'**un matériau plat en forme de plaque ou de bande, d'une structure constitutive correspondant à celle de la feuille de matière plastique et d'une épaisseur d'au moins 0,4 mm, est aminci, avant le thermoformage, à l'épaisseur de la feuille de matière plastique, par étirage bi-axial dans la direction longitudinale et transversale, et les pièces de fond sont ensuite réalisées par thermoformage de la feuille de matière plastique.

2. Procédé selon la revendication 1, **caractérisé en ce que** le matériau plat est fabriqué par extrusion ou coextrusion.

3. Procédé selon la revendication 1 ou 2, **caractérisé en ce que** le rapport d'étirage est le même dans la direction longitudinale et dans la direction transversale.

4. Procédé selon l'une des revendications 1 à 3, **caractérisé en ce que** l'étirage est effectué simultanément dans la direction longitudinale et dans la direction transversale.

5. Procédé selon l'une des revendications 1 à 4, **caractérisé en ce que** le rapport d'étirage dans la direction longitudinale et dans la direction transversale est d'une valeur de 2:1 à 8:1, de préférence de 2:1 à 6:1.

6. Procédé selon l'une des revendications 1 à 5, **caractérisé en ce que** la feuille de matière plastique est une mono-feuille en polypropylène (PP) ou une feuille à couches multiples avec au moins une couche en polypropylène.

7. Procédé selon l'une des revendications 1 à 5, **caractérisé en ce que** la feuille de matière plastique est une feuille à couches multiples de la structure constitutive suivante, à savoir PP / couche adhésive / EVOH ou PP / couche adhésive / EVOH / couche adhésive / PP.

8. Procédé selon l'une des revendications 1 à 5, **caractérisé en ce que** la feuille de matière plastique est une feuille à couches multiples de la structure constitutive suivante, à savoir PP / couche adhésive / polyamide (PA) ou PP / couche adhésive / PA / couche adhésive / PP.

9. Procédé selon l'une des revendications 1 à 5, **caractérisé en ce que** la feuille de matière plastique est une feuille du type monocouche ou à couches multiples comprenant au moins une couche transformée en mousse, en particulier une structure à trois couches, de la structure constitutive suivante, à savoir PP / PP transformé en mousse / PP ou PE / PE transformé en mousse / PE.
